(19) Europäisches Patentamt
European Patent Office
Office européen des brevets

(11) **EP 4 632 988 A1**

(12) **EUROPEAN PATENT APPLICATION**
published in accordance with Art. 153(4) EPC

(43) Date of publication:
**15.10.2025 Bulletin 2025/42**

(21) Application number: **24843468.0**

(22) Date of filing: **16.07.2024**

(51) International Patent Classification (IPC):
**H02J 3/32** (2006.01)    **H02J 7/00** (2006.01)
**G06Q 50/06** (2024.01)

(52) Cooperative Patent Classification (CPC):
**G06Q 50/06; H02J 3/32; H02J 7/00**

(86) International application number:
**PCT/KR2024/010138**

(87) International publication number:
**WO 2025/018752 (23.01.2025 Gazette 2025/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.07.2023 KR 20230092219**

(71) Applicant: **LG Energy Solution, Ltd.
Seoul 07335 (KR)**

(72) Inventor: **KIM, Daesoo
Daejeon 34122 (KR)**

(74) Representative: **BCKIP Part mbB
MK1
Landsbergerstraße 98, 3.Stock
80339 München (DE)**

(54) **OPERATION SUPPORT DEVICE AND METHOD OF ENERGY STORAGE SYSTEM**

(57) Disclosed is an operation support device for an energy storage system, the operation support device including: at least one processor; and a memory for storing at least one instruction executed via the at least one processor. The at least one instruction may include: an instruction for collecting information about batteries and inverters that are applicable to the energy storage system; an instruction for deriving, based on a structure of the energy storage system, a plurality of combinations, each including one or more batteries and inverters; an instruction for calculating, for each of the combinations, an operating cost of the energy storage system; and an instruction for generating recommended combination information including information about a combination that represents a minimum operating cost among the combinations.

[Figure 3]

EP 4 632 988 A1

**Description**

[Technical Field]

This specification claims priority to and the benefit of Korean Patent Application No. 10-2023-0092219 filed in the Korean Intellectual Property Office on July 17, 2023, the entire contents of which are incorporated herein by reference.
The present invention relates to an operation support device and method for an energy storage system, and more specifically, to an operation support device and method for an energy storage system, which supports the minimization of operating costs of the energy storage system.

[Background Art]

An Energy Storage System (ESS) uses a battery that stores energy in a form being operated while being linked with new and renewable energy and a power grid. In recent years, as smart grids and new and renewable energy have become more widespread and the efficiency and stability of power grids have been emphasized, energy storage systems are increasingly being demanded to control power supply and demand and improve power quality. Depending on the purpose of use, energy storage systems may vary in power and capacity, and multiple battery systems may be interconnected to form a large capacity energy storage system.
Among ESSs, the ESS that is linked with photovoltaic (PV) systems is becoming increasingly popular. The PV-linked ESS is configured to appropriately distribute and supply the power supplied by the power grid and the power generated by the PV system to the load, and to store the residual power in a battery system.
The most important goal considered by the user of the ESS is to minimize the operating costs of the ESS. The costs paid by the user during the operation of the ESS consist of the purchase cost of grid power, which must be paid at regular intervals, and the cost of battery replacement, which is incurred whenever the battery needs to be replaced. In general, the ESS is controlled by considering various factors, such as the amount of power generation of the PV system, the amount of power required of the load, and the state of charge of the battery. However, the related art focuses on the method of controlling the ESS to improve power efficiency or battery performance, and is limited in minimizing the cost to the user in view of a long-term operation perspective of the ESS.
Therefore, there is a need for appropriate energy storage system operation support technologies that support minimization of the long-term operating costs of energy storage systems.

[Detailed Description of the Invention]

[Technical Problem]

An object of the present invention to solve the foregoing problems is to provide an operation support device and method for energy storage system, which supports minimization of operating costs of the energy storage system.
Another object of the present invention to solve the foregoing problems is to provide an operation support method by the operation support device.

[Technical Solution]

In order to achieve the foregoing object, an exemplary embodiment of the present invention provides an operation support device for an energy storage system, the operation support device including: at least one processor; and a memory for storing at least one instruction executed via the at least one processor.
The at least one instruction may include: an instruction for collecting information about batteries and inverters that are applicable to the energy storage system; an instruction for deriving, based on a structure of the energy storage system, a plurality of combinations, each including one or more batteries and inverters; an instruction for calculating, for each of the combinations, an operating cost of the energy storage system; and an instruction for generating recommended combination information including information about a combination that represents a minimum operating cost among the combinations.
The instruction for collecting the information about the batteries and the inverters may include an instruction for collecting one or more of, for each of the batteries, a model name, a capacity, a critical SOC range, and a purchase cost, and for each of the inverters, a model name, a power limit, and a purchase cost.
The instruction for deriving the plurality of combinations may include: an instruction for deriving a range of the number of batteries based on a capacity of a battery and a power limit of an inverter; and an instruction for deriving a plurality of combinations applicable to the energy storage system, based on the range of the number of batteries and a design structure of the battery system.

The instruction for calculating the operating cost of the energy storage system may include: an instruction for calculating, for each of the combinations, a grid power purchase cost and a battery and inverter purchase cost; and an instruction for calculating the operating cost based on the grid power purchase cost and the battery and inverter purchase cost.

The instruction for calculating the operating cost of said energy storage system may include an instruction for calculating a grid power purchase cost for a predetermined period of time for each of said combinations, based on past historical information about at least one of said energy storage system, a load interworking with said energy storage system, and a power generation device interworking with said energy storage system.

The instruction for calculating the grid power purchase cost may include: an instruction for collecting information about a power consumption state of the load and information about a power generation state of the power generation device; an instruction for deriving, by using an objective function defined by the grid power purchase cost, an operating schedule including the amount of charge and discharge per time interval that minimizes the grid power purchase cost; and an instruction for applying the operating schedule and grid power cost information to the energy storage system according to each of the combinations to calculate the grid power purchase cost for a predetermined period of time for each of the combinations.

Herein, the objective function may include defined constraints including at least one of: a first condition concerning a balance of power supply and power consumption, a second condition concerning a state of charge (SOC) according to a charge/discharge efficiency of the battery, a third condition concerning the amount of limit charge of the battery, a fourth condition concerning the amount of power limit of the inverter, and a fifth condition concerning a binarization of the state of charge and the state of discharge.

The at least one instruction may further include an instruction for providing the generated recommended combination information to a user terminal interworking with the energy storage system.

Herein, the recommended combination information may include one or more of the number of batteries applied to the energy storage system, a connection structure of the batteries, and a model name of the inverter.

**In** order to achieve the foregoing object, another exemplary embodiment of the present invention provides an operation support method for an energy storage system, the operation support method including: collecting information about batteries and inverters that are applicable to the energy storage system; deriving, based on a structure of the energy storage system, a plurality of combinations, each including one or more batteries and inverters; calculating, for each of the combinations, an operating cost of the energy storage system; and generating recommended combination information including information about a combination that represents a minimum operating cost among the combinations.

The collecting of the information about the batteries and the inverters may include collecting one or more of, for each of the batteries, a model name, a capacity, a critical SOC range, and a purchase cost, and for each of the inverters, a model name, a power limit, and a purchase cost.

The deriving of the plurality of combinations may include: deriving a range of the number of batteries based on a capacity of a battery and a power limit of an inverter; and deriving a plurality of combinations applicable to the energy storage system, based on the range of the number of batteries and a design structure of the battery system.

The calculating of the operating cost of the energy storage system may include: calculating, for each of the combinations, a grid power purchase cost and a battery and inverter purchase cost; and calculating the operating cost based on the grid power purchase cost and the battery and inverter purchase cost.

The calculating of the operating cost of the energy storage system may include calculating a grid power purchase cost for a predetermined period of time for each of the combinations, based on past historical information about at least one of the energy storage system, a load interworking with the energy storage system, and a power generation device interworking with the energy storage system.

The calculating of the grid power purchase cost may include: collecting information about a power consumption state of the load and information about a power generation state of the power generation device; deriving, by using an objective function defined by the grid power purchase cost, an operating schedule including the amount of charge and discharge per time interval that minimizes the grid power purchase cost; and applying the operating schedule and grid power cost information to the energy storage system according to each of the combinations to calculate the grid power purchase cost for a predetermined period of time for each of the combinations.

Herein, the objective function may include defined constraints including at least one of: a first condition concerning a balance of power supply and power consumption, a second condition concerning a state of charge (SOC) according to a charge/discharge efficiency of the battery, a third condition concerning the amount of limit charge of the battery, a fourth condition concerning the amount of power limit of the inverter, and a fifth condition concerning a binarization of the state of charge and the state of discharge.

The operation support method may further include an instruction for providing the generated recommended combination information to a user terminal interworking with the energy storage system.

Herein, the recommended combination information may include one or more of the number of batteries applied to the energy storage system, a connection structure of the batteries, and a model name of the inverter.

[Advantageous Effects]

According to the exemplary embodiments of the present invention described above, it is possible to minimize costs paid by users incurred during long-term operation of the energy storage system.

[Brief Description of Drawings]

FIG. 1 is a block diagram illustrating an energy storage system to which the present invention is applicable.
FIG. 2 is a diagram illustrating an example implementation of the energy storage system to which the present invention is applicable.
FIG. 3 is a flowchart of an operation support method for an energy storage system according to an exemplary embodiment of the present invention.
FIG. 4 is a reference table for describing battery information and inverter information according to the exemplary embodiment of the present invention.
FIG. 5 is a reference table for illustrating a method of deriving battery-inverter combinations according to the exemplary embodiment of the present invention.
FIG. 6 is a reference table for illustrating a method of deriving an optimal combination according to the exemplary embodiment of the present invention.
FIG. 7 is a block diagram of an operation support device for an energy storage system according to an exemplary embodiment of the present invention.
100: Energy storage system
200: Load
300: Power generation device
400: Power grid
500: Operation support device
600: User terminal

[Best Mode]

The invention is subject to various modifications and may have many exemplary embodiments, and certain exemplary embodiments are illustrated in the drawings and described in more detail in the detailed description. However, it is not intended to limit the present invention to the specific exemplary embodiments, and it will be appreciated that the present invention includes all modifications, equivalences, or substitutions included in the spirit and the technical scope of the present invention. In describing each drawing, like reference numerals in the drawings refer to the same or similar functions.
Terms, such as first, second, A, and B, are used for describing various constituent elements, but the constituent elements are not limited by the terms. The terms are used only to discriminate one constituent element from another constituent element. For example, without departing from the scope of the invention, a first constituent element may be named as a second constituent element, and similarly a second constituent element may be named as a first constituent element. A term "and/or" includes a combination of multiple relevant described items or any one of the multiple relevant described items.
It should be understood that when one constituent element referred to as being "coupled to" or "connected to" another constituent element, one constituent element may be directly coupled to or connected to the other constituent element, but intervening elements may also be present. By contrast, when one constituent element is referred to as being "directly coupled to" or "directly connected to" another constituent element, it should be understood that there are no intervening elements.
Terms used in the present application are used only to describe specific exemplary embodiments, and are not intended to limit the present invention. Singular expressions used herein include plurals expressions unless they have definitely opposite meanings in the context. In the present application, it will be appreciated that terms "including" and "having" are intended to designate the existence of characteristics, numbers, steps, operations, constituent elements, and components described in the specification or a combination thereof, and do not exclude a possibility of the existence or addition of one or more other characteristics, numbers, steps, operations, constituent elements, and components, or a combination thereof in advance.
All terms used herein including technical or scientific terms have the same meanings as meanings which are generally understood by those skilled in the art unless they are differently defined. Terms defined in generally used dictionary shall be construed as having meanings matching those in the context of a related art, and shall not be construed in ideal or excessively formal meanings unless they are clearly defined in the present application

Some of the terms used in the present specification are defined below.

State of Charge (SOC) is a current state of charge of a battery expressed as a percentage (%), and State of Health (SOH) is a current state of degradation of a battery expressed as a percentage (%).

Power Limit indicates the limit of power that may be output, preset by a battery manufacturer based on the state of the battery or set according to the SOC. The power limit may be divided into charge power limit and discharge power limit depending on whether a battery is charging or discharging.

Hereinafter, an exemplary embodiment according to the invention will be described in detail with reference to the accompanying drawings.

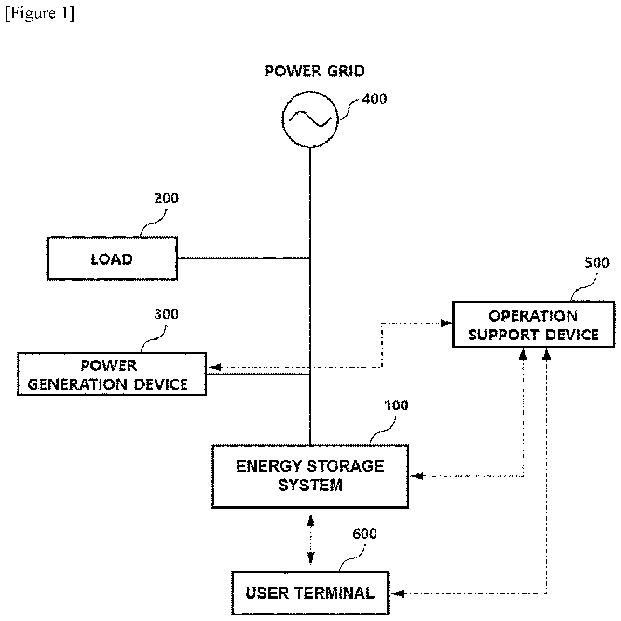

FIG. 1 is a block diagram illustrating an energy storage system to which the present invention is applicable.

An energy storage system 100 may be electrically connected to a power generation device 300 and a power grid 400 to receive power from the power generation device 300 and the power grid 400 and store the received power internally.

The energy storage system 100 may be electrically connected to a load 200, and may supply power stored therein to the load 200. Meanwhile, the load 200 may be electrically connected with the power generation device 300 and the power grid 400 to receive power from the power generation device 300 and the power grid 400.

The power generation device 300 is a device that generates power using a power generation device, and may include at least one of photovoltaic, solar, wind, and geothermal power generation devices. **In** the meantime, the type of power generation device 300 is not an essential component of the present invention, so that the scope of the present invention is not limited to these entities.

The energy storage system 100 may be configured to be connected with the user terminal 600 via a network to transceive data from each other. For example, when the energy storage system 100 is a residential ESS, the user terminal 600 may be configured to be connected with a Home Energy Management System (HEMS), which is the top-level control system of the residential ESS, via a network to transceive data from each other.

The user terminal 600 may be a computing device used by an owner or a manager of the energy storage system 100, and may correspond to, for example, a personal computer (PC), mobile phone, or tablet PC.

The energy storage system 100 may transmit information about at least one of an operation state of the energy storage system 100, a power generation state of the power generation device 300, and a power consumption state of the load 200 to the user terminal 600. Herein, the user terminal 600 may be configured to output the received information via a predetermined Graphical User Interface (GUI).

The user terminal 600 may transmit a selection signal input by the user to the energy storage system 100, and the energy storage system 100 may be configured to perform a control operation corresponding to the selection signal. For example, when an off request signal for a specific load is received via the user terminal 600, the EMS of the energy storage system 100 may block an electrical path for the corresponding load, thereby blocking the power supply to the load.

The operation support device 500 may be configured to be connected with the energy storage system 100 via the network to transceive data from each other. Further, the operation support device 500 may be configured to be connected via a network with at least one of the power generation device 300 and the user terminal 600 to transceive data from each other.

The operation support device 500 may be configured while being included within the energy storage system 100, or may be separate and external to the energy storage system 100. For example, the operation support device 500 may be implemented while being included in the HEMS of a residential ESS, or may be implemented while being included in a server of an ESS management company.

The operation support device 500 may collect information about batteries and inverters applicable to the energy storage system 100 and generate information about recommended combinations of batteries and inverters that may minimize operating costs of the energy storage system. Herein, the operation support device 500 may provide the generated recommended combination information to one or more of the energy storage system 100 and the user terminal 600. **In** the meantime, the method of generating the recommended combination information will be described later.

The operation support device 500 may monitor one or more of an operation state of the energy storage system 100, a power generation state of the power generation device 300, and a power consumption state of the load 200, and establish an operation schedule to minimize the cost of purchasing power from the energy storage system 100. Herein, the operation schedule may include the amount of charge and discharge of the battery per time interval. The operation support device 500 may transmit the established operation schedule to a battery charge and discharge control device of the energy storage system 100, such that the batteries of the energy storage system 100 are charge and discharge controlled in accordance with the operation schedule.

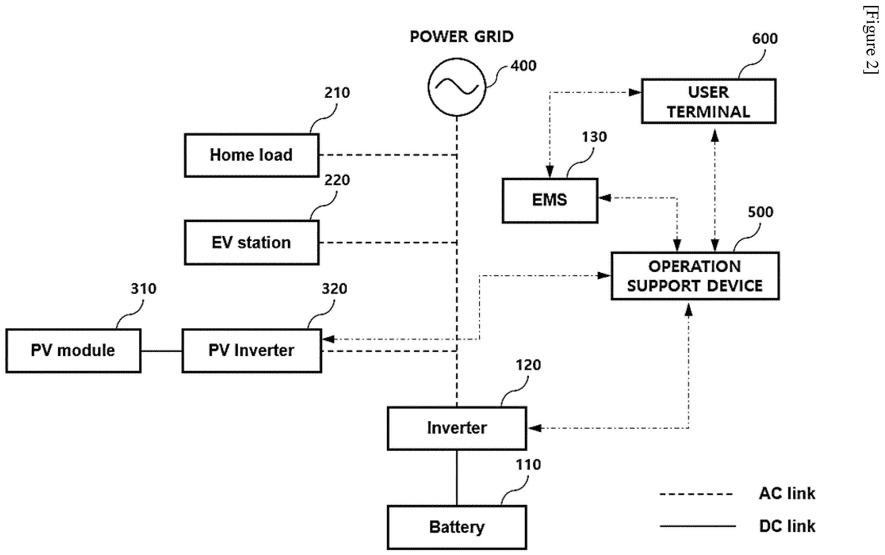

FIG. 2 is a diagram illustrating an example implementation of the energy storage system to which the present invention is applicable.

Referring to FIG. 2, the energy storage system 100 may include a battery 110 for storing power, an inverter 120 for controlling the charging and discharging operation of the battery 110, and an EMS 130 for integrally managing configurations of the energy storage system and power devices associated with the energy storage system.

The battery 110, which serves to store power, may typically be implemented in the form of a plurality of battery packs configuring a battery rack, and a plurality of battery racks configuring a battery bank. Herein, the battery pack may also be referred to as a battery module, depending on the device or system in which the battery is used.

Each battery may be equipped with a Battery Management System (BMS). The BMS may serve to monitor the current, voltage, and temperature of each battery rack (or pack) under its control, calculate a State Of Charge (SOC) based on the monitoring results, and control charging and discharging.

The inverter 120 is also referred to as a Power Conditioning System (PCS) or Power Conversion System (PCS), may control the power supplied to the battery from the outside and the power supplied by the battery to the outside.

The inverter 120 may include a Power Management System (PMS), and the operation support device 500 may be configured to interwork with the power management system of the inverter 120 to transceive data from each other.

The inverter 120 may control the charging and discharging operation of the battery 110 according to the operation schedule by the operation support device 500. For example, the inverter 120 may receive an operation schedule for a specific day from the operation support device 500 and control the charging and discharging operation of the battery 110 according to a reference power for each time interval included in the operation schedule.

The EMS 130 may interwork with loads, power generation devices, and inverters, and may monitor and control the interworking configurations.

The PV system may include a PV module 310 (for example, solar panels), a PV inverter 320, which is an AC/DC inverter, and may be configured with an AC terminals of the PV inverter 320 and an AC terminal of the inverter 120 of the energy storage system connected in an AC link.

The load may include a general load 210 inside the house, and an EV charging station 220. The EV charging station 220 is a system for charging an electric vehicle, and may be configured to receive power from the AC link for charging the electric vehicle.

The energy storage system illustrated in FIG. 2 is an AC coupled ESS, where the PV system, the load, and the energy storage system are connected on an AC link.

When the energy storage system is an AC coupled structure, the operations support device 500 may interwork with at least one of the inverter 120, the PV inverter 320, and the EMS 130, and collect basic information to generate recommended combination information.

In the meantime, the present invention is also applicable to a DC coupled ESS in which an output terminal of the PV system and an output terminal of the battery are connected on a DC link, and the DC link is connected to one terminal of the inverter. When the energy storage system is a DC coupled structure, the PV inverter 320 is omitted, so that the operation support device 500 may interwork with at least one of the inverter 120 and the EMS 130, and collect basic information to generate recommended combination information.

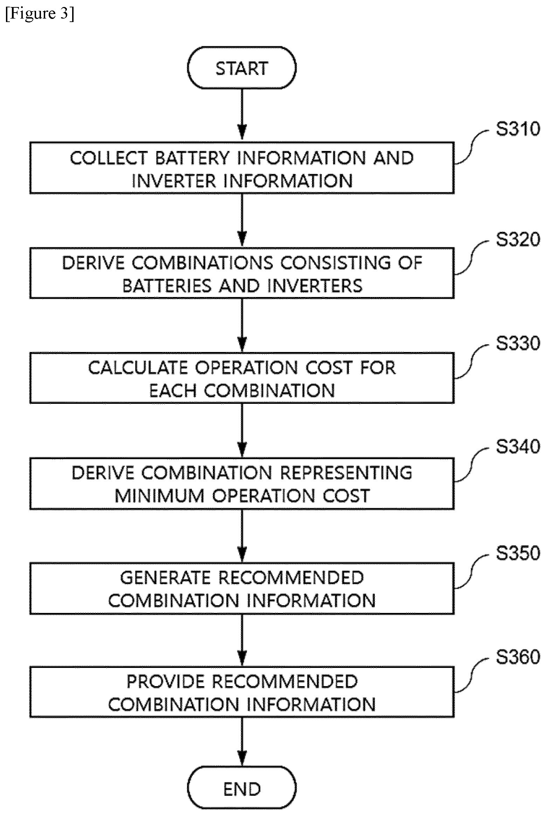

FIG. 3 is a flowchart of an operation support method for an energy storage system according to an exemplary embodiment of the present invention.

The operation support method for the energy storage system according to the exemplary embodiment of the present invention may be performed by the operation support device interworking with the energy storage system.

The operation support device may collect information about the battery and information about the inverter, which may be applicable to the energy storage system (S310). Herein, the operation support device may check the battery information and the inverter information from one or more of a storage device, an external storage device connected by a manager, and a user terminal.

The information about the batteries may include one or more of a model name, a capacity, a critical SOC range, and a purchase cost for each of the one or more batteries. Further, the information about the inverter may include one or more of a model name, a power limit, and a purchase cost for each of the one or more inverters.

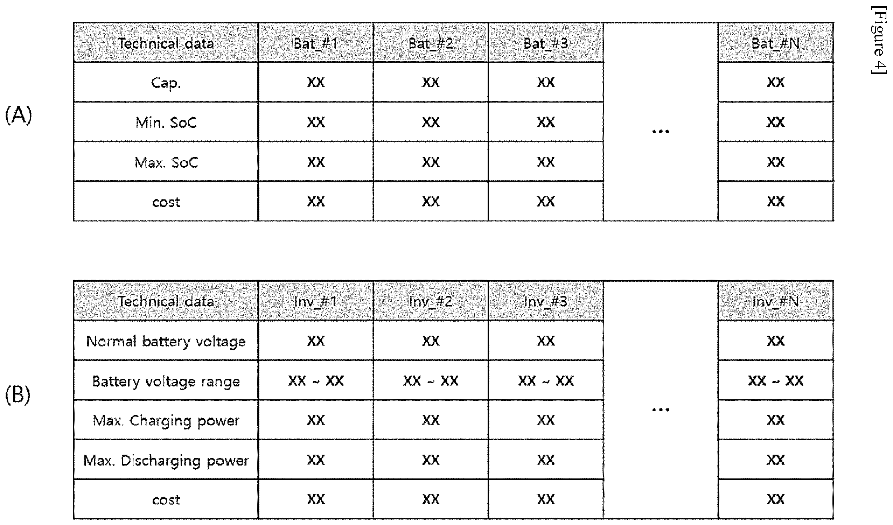

FIG. 4 is a reference table for describing battery information and inverter information according to the exemplary embodiment of the present invention.

Referring to FIG. 4 (A), the operations support device may collect a battery list including a model name (or identifier), a capacity, an SOC lower limit value, an SOC upper limit value, and a purchase cost for each of a plurality of batteries that is applicable to the energy storage system.

Referring to FIG. 4 (B), the operation support device may collect an inverter list including a model name (or identifier), a capacity, battery voltage information, charge power limit, discharge power limit, and purchase cost for each of the plurality of inverters that is applicable to the energy storage system.

The operation support device may receive model information of the battery system from the energy storage system or the user terminal, and may determine a battery and an inverter that are applicable to the corresponding energy storage system based on the received model information.

Referring again to FIG. 3, the operation support device may derive a plurality of battery-inverter combinations based on the design structure of the energy storage system (S320). Herein, the battery-inverter combinations may include one or more batteries and inverters.

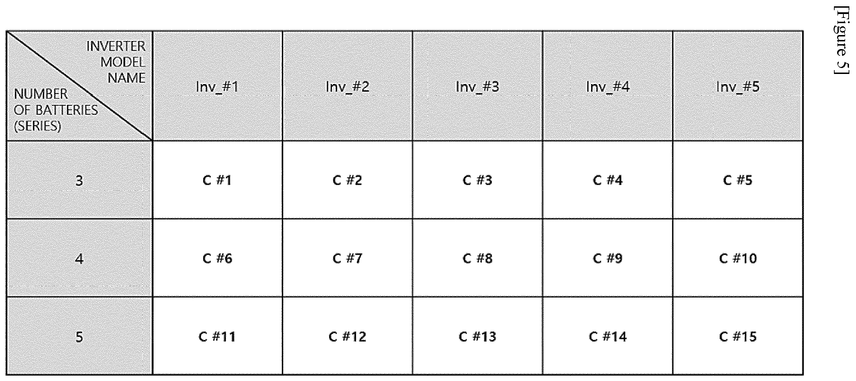

FIG. 5 is a reference table for illustrating a method of deriving battery-inverter combinations according to the exemplary embodiment of the present invention.

For example, when it is identified that according to the design structure of the energy storage system, at least 3 and no more than 5 series-connected batteries are connectable to 1 inverter, and inverter models applicable to the energy storage system are 5 (Inv #1 to #5), the operation support device may derive a total of 15 battery-inverter combinations (C #1 to #15), as illustrated in FIG. 5. The 15 combinations derived from the above example are [3 batteries, Inv #1], [3 batteries, Inv #2], [3 batteries, Inv #3], [3 batteries, Inv #4], [3 batteries, Inv #5], [4 batteries, Inv #1], [4 batteries, Inv #2], [4 batteries, Inv #3], [4 batteries, Inv #4], [4 batteries, Inv #5], [5 batteries, Inv #1], [5 batteries, Inv #2], [5 batteries, Inv #3], [5 batteries, Inv #4], and [5 batteries, Inv #5] as illustrated in FIG. 5.

In the exemplary embodiment, the operation support device may derive a range of the number of batteries applicable to the energy storage system based on the capacity of the battery and the power limit of the inverter. For example, the number of batteries may be determined to be a range such that the total capacity of the combination of batteries exceeds the minimum guaranteed capacity of the energy storage system and is less than the limit capacity according to the power limit of the inverter.

Referring again to FIG. 3, the operation support device may calculate an operating cost of the energy storage system for each of the combinations derived in S320 (S330). Herein, the operating cost of the energy storage system may be calculated based on the grid power purchase cost, and the battery and inverter purchase cost.

The operation support device may then derive a combination that represents the minimum operating cost among the combinations (S340), and determine the derived combination as the optimal combination.

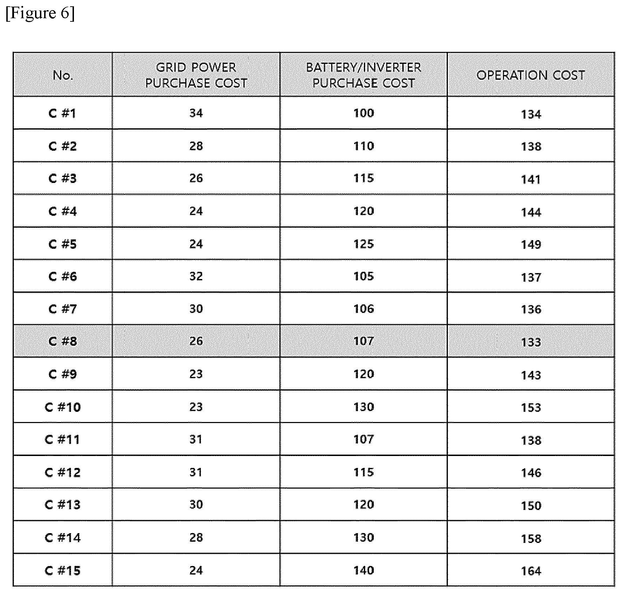

FIG. 6 is a reference table for illustrating a method of deriving an optimal combination according to the exemplary embodiment of the present invention.

**Referring** to FIG. 6, the operation support device may calculate, for each of the 15 battery-inverter combinations (C #1 to #15) derived in S330, the power grid purchase cost and the battery and inverter purchase cost. The operation support device may then sum the power grid purchase cost and the battery and inverter purchase cost to calculate a total operating cost for each of the battery-inverter combinations. At this point, the operation support device may determine, among the 15 combinations, the combination [4 batteries, Inv #3] (C #8) representing the lowest total operating cost as the optimal combination.

In the exemplary embodiment, the operating cost of the energy storage system may be calculated as the value ($C\_t = C\_p + C\_bi$) obtained by summing the grid power purchase cost ($C\_p$) and the battery and inverter purchase cost ($C\_bi$), as illustrated in FIG. 6.

In another exemplary embodiment, the operating cost of the energy storage system may be calculated as the value ($C\_t = a*C\_p + b*C\_bi$) obtained by summing the value reflecting the predetermined weighting factor (a) for the grid power purchase cost ($C\_p$) and the value reflecting the predetermined weighting factor (b) for the battery and inverter purchase cost ($C\_bi$).

In another exemplary embodiment, the operating cost of the energy storage system may be calculated as the value ($C\_t = a*C\_p * b*C\_bi$) obtained by multiplying the value reflecting the predetermined weighting factor (a) for the grid power purchase cost ($C\_p$) by the value reflecting the predetermined weighting factor (b) for the battery and inverter purchase cost ($C\_bi$).

That is, the operating costs of the energy storage system may be calculated in a variety of methods, depending on needs.

Referring again to FIG. 3, in S330, the operation support device may calculate a grid power purchase cost for a predetermined period of time for each of the combinations derived in S320, based on past historical information about one or more of the energy storage system, the load, and the power generation device. Herein, the operation support device may receive past historical information over a certain period of time from at least one of the user terminal 600, the EMS 130, the inverter 120, the EV charging station 220, and the PV inverter 320.

The past historical information may include one or more of power consumption state information of a load (for example, the amount of power consumption per time unit), power generation state information of a power generation device (for example, the amount of power generation per time unit), and charge and discharge schedule information of a battery (for example, the amount of charge and discharge per time unit).

The operation support device may perform a simulation by using the past historical information for the energy storage system with the battery and the inverter according to each of the combinations C #1 to #15. The operation support device may then calculate a grid power purchase cost for a predetermined period of time (for example, a month) for each of the combinations based on the amount of grid power used per unit time and grid power cost information per unit time derived from the simulation.

In the exemplary embodiment, the operation support device may derive an operation schedule (the amount of charge and discharge per unit time) of the battery that minimizes the grid power purchase cost based on the past historical information about the load and the power generation device, and calculate the grid power purchase cost by using the derived operation schedule.

Specifically, the operation support device may collect information about the state of power generation and information about the state of power consumption over a certain past period of time (for example, over the past one year). The operation support device may then derive, by using an objective function defined by the grid power purchase cost, an operation schedule for a certain period of time (for example, one day) that minimizes the grid power purchase cost.

The operation support device may derive an operation schedule by using an objective function defined based on Mixed-Integer Linear Programming (MILP). In the following, a specific implementation example of the operation schedule generation method will be described in detail.

The operation support device may derive an operation schedule including the amount of charge and discharge of the battery per time interval by using an objective function defined by the grid power purchase cost. Herein, the objective function may be defined as shown in Equation 1 below.

[Equation 1]

$$\text{Minimize} \left( \sum_{t=1}^{t=24} P_{grid}(t) * \lambda_{grid}(t) \right)$$

(Where $P_{grid}(t)$ is the grid power schedule and $\lambda_{grid}(t)$. is the grid power cost.)

Equation 1 is an objective function to derive the amount of charge or the amount of discharge of the battery per time interval that minimizes the grid power purchase cost. Herein, the objective function according to Equation 1 may include defined constraints including at least one of a first condition regarding a balance of power supply and power consumption, a second condition regarding a state of charge (SOC) based on charge/discharge efficiency of the battery, a third condition regarding the amount of limit charge of the battery, a fourth condition regarding a power limit of the power conversion device, and a fifth condition regarding a binarization of the charge/discharge states.

[Equation 2]

$$P_{grid}(t) + P_{Bat_{dch}}(t) + P_{PV}(t) = P_{load}(t) + P_{Bat_{ch}}(t)$$

(Where $P_{Bat_{ch}}(t)$ is the amount of charge power of the battery, $P_{Bat_{dch}}(t)$ is the amount of discharge power of the battery, $P_{PV}(t)$ is the amount of power generation, and $P_{load}(t)$ is the amount of power consumption.)

[Equation 3]

$$SOC(t+1) = SOC(t) + \frac{\eta_{ch} * P_{Bat_{ch}}(t) - \frac{1}{\eta_{dch}} * P_{Bat_{dch}}(t)}{E_{cap}} * t_{step}$$

(Where $SOC(t)$ is the SOC of the battery, $E_{cap}$ is the capacity of the battery, $\eta_{ch}$ is the charging efficiency of the power conversion device, $\eta_{dch}$ is the discharging efficiency of the power conversion device, and $t_{step}$ is the time interval.)

[Equation 4]

$$SOC_{min} \leq SOC(t) \leq SOC_{max}$$

(Where $SOC_{min}$ is the lower limit value of SOC and $SOC_{max}$ is the upper limit value of SOC.)

[Equation 5]

$$P_{Bat_{ch}}(t) - \mu_{ch}(t) * P_{Inv\_max} \leq 0$$

(Where $\mu_{ch}$ is the battery state value for charging with a value of 0 or 1, and $P_{Inv\_max}$ is the maximum power of the inverter.)

[Equation 6]

$$P_{Bat_{dch}}(t) - \mu_{dch}(t) * P_{Inv\_max} \leq 0$$

(Where $\mu_{dch}$ is the battery state value for discharging with a value of 0 or 1.)

[Equation 7]

$$\mu_{ch}(t) + \mu_{dch}(t) \leq 1$$

The first condition may be implemented as Equation 2, which functions to ensure that the decision variables $P_{Bat_{ch}}(t)$ and $P_{Bat_{dch}}(t)$ are determined to balance the supply and demand of power. Meanwhile, in Equation 2, $P_{PV}(t)$ and $P_{load}(t)$ may be the amount of power generation per unit time and the amount of power consumption per unit time according to the past historical information.

On the other hand, when the collected past historical information includes power consumption state information for each of the plurality of loads, Equation 2 may be modified as shown in Equation 8 below.

[Equation 8]

$$P_{grid}(t) + P_{Bat_{dch}}(t) + P_{PV}(t)$$

$$= P_{flexible\ load}(t) + P_{non\ flexible\ load}(t) + P_{EV}(t) + P_{Bat_{ch}}(t)$$

(Where $P_{flexible\ load}(t)$ is the amount of power consumption of a load that may be controlled on and off, $P_{nom\ flexible\ load}(t)$ is the amount of power consumption of a load that cannot be controlled on and off, and $P_{EV}(t)$ is the amount of power consumption of an EV charging station.)

In other words, the Equation for the first condition regarding the balance of power supply and power consumption may have some terms added or deleted in response to the power consumption state information included in the past historical information.

The second condition may be implemented as Equation 3, which functions to ensure that the SOC in the next time interval is determined based on the battery capacity and charge/discharge efficiency.

The third condition may be implemented as Equation 4, and functions to ensure that the SOC is determined within a set threshold range.

The fourth and fifth conditions may be implemented as Equations 5 to 7, and function to ensure that the decision variables $P_{Bat_{ch}}(t)$ and $P_{Bat_{dch}}(t)$ do not exceed the power capacity of the inverter, and that the amount of charge power and the amount of discharge power cannot be determined simultaneously.

The operation control device may derive $P_{Bat_{ch}}(t)$ and $P_{Bat_{dch}}(t)$ that satisfy the objective function and constraints, and generate an operation schedule including the $P_{Bat_{ch}}(t)$ and $P_{Bat_{dch}}(t)$.

The operation support device may perform a simulation by using the past historical information on power consumption and power generation, and the generated operation schedule for the energy storage system with the battery and inverter according to each of the combinations C #1 to #15. The operation support device may then calculate a grid power purchase cost for a predetermined period of time (for example, a month) for each of the combinations based on the amount of grid power used per unit time and grid power cost information per unit time derived from the simulation.

Once the optimal combination representing the minimum operating cost is determined in S340, the operation support device may generate recommended combination information including information about the optimal combination (S350). Herein, the recommended combination information may include one or more of the number of batteries applied to the energy storage system, a connection structure of the batteries, and a model name of the inverter. For example, the recommended combination information may be implemented as [4 batteries, series connection, Inv 9801].

The operation support device may provide the recommended combination information generated in S350 to the user terminal (S360). Herein, the user terminal may output the received recommended combination information via a predetermined GUI.

In the exemplary embodiment, the operation support device may provide an optimal operation schedule corresponding to the optimal combination to the user terminal, the EMS, or the inverter. Herein, the optimal operating schedule may correspond to an operating schedule derived based on an objective function and constraints in calculating the grid power purchase cost of the corresponding optimal combination. In other words, the operation support device may provide the optimal operating schedule corresponding to the recommended combination as a reference operating schedule such that, when the optimal battery-inverter combination is applied to the energy storage system in the future, the grid power purchase cost is minimized when the energy storage system is operated with the corresponding combination.

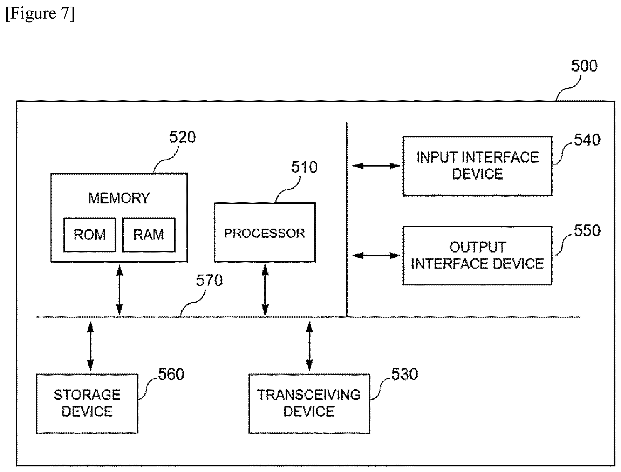

FIG. 7 is a block diagram of the operation support device for the energy storage system according to the exemplary embodiment of the present invention.

The operation support device 500 according to the exemplary embodiment of the present invention may be configured while being included within the energy storage system, or may be separate and external to the energy storage system. For example, the operation support device 500 may be implemented while being included in the HEMS, which is the top-level control system of the residential ESS, or may be implemented while being included in a server of an ESS management company.

The operation support device 500 may include at least one processor 510, a memory 520 storing at least one instruction executed via the processor, and a transceiving device 530 performing communication via network connection.

The at least one instruction may include: an instruction for collecting information about batteries and inverters that are applicable to the energy storage system; an instruction for deriving, based on the structure of the energy storage system, a plurality of combinations, each including one or more batteries and inverters; an instruction for calculating, for each of the combinations, an operating cost of the energy storage system; and an instruction for generating recommended combination information including information about a combination that represents a minimum operating cost among the combinations.

The instruction for collecting the information about the batteries and the inverters may include an instruction for collecting one or more of, for each of the batteries, a model name, a capacity, a critical SOC range, and a purchase cost, and for each of the inverters, a model name, a power limit, and a purchase cost.

The instruction for deriving the plurality of combinations may include an instruction for deriving a range of the number of batteries based on the capacity of the battery and the power limit of the inverter; and an instruction for deriving a plurality of combinations applicable to the energy storage system, based on the range of the number of batteries and the design structure of the battery system.

The instruction for calculating the operating cost of the energy storage system may include an instruction for calculating, for each of the combinations, a grid power purchase cost and a battery and inverter purchase cost; and an instruction for calculating the operating cost based on the grid power purchase cost and the battery and inverter purchase cost.

The instruction for calculating the operating cost of the energy storage system may include an instruction for calculating a grid power purchase cost for a predetermined period of time for each of the combinations, based on past historical information about at least one of the energy storage system, a load interworking with the energy storage system, and a power generation device interworking with the energy storage system.

The instruction for calculating the grid power purchase cost may include an instruction for collecting information about a power consumption state of the load and information about a power generation state of the power generation device; an instruction for deriving, by using an objective function defined by the grid power purchase cost, an operating schedule including the amount of charge and discharge per time interval that minimizes the grid power purchase cost; and an instruction for applying the operating schedule and grid power cost information to the energy storage system according to each of the combinations to calculate the grid power purchase cost for a predetermined period of time for each of the combinations.

Herein, the objective function may include defined constraints including at least one of: a first condition concerning a balance of power supply and power consumption, a second condition concerning a state of charge (SOC) according to a charge/discharge efficiency of the battery, a third condition concerning the amount of limit charge of the battery, a fourth condition concerning the amount of power limit of the inverter, and a fifth condition concerning a binarization of the state of charge and the state of discharge.

The at least one instruction may further include an instruction for providing the generated recommended combination information to a user terminal interworking with the energy storage system.

Herein, the recommended combination information may include one or more of the number of batteries applied to the energy storage system, a connection structure of the batteries, and a model name of the inverter.

The operation support device 500 may further include an input interface device 540, an output interface device 550, a storage device 560, and the like. Each of the components included in the operation support device 500 may be connected by a bus 570 to communicate with each other.

Herein, the processor 510 may refer to a Central Processing Unit (CPU), a Graphics Processing Unit (GPU), or a dedicated processor on which the methods according to the exemplary embodiments of the present invention are performed. The memory (or storage device) may include at least one of a volatile storage medium and a non-volatile storage medium. For example, the memory may be formed of at least one of Read Only Memory (ROM) and Random Access Memory (RAM).

The operation of the method according to the exemplary embodiment of the present invention may be implemented as a computer-readable program or code on a computer-readable recording medium. The computer-readable recording medium includes all types of recording devices in which data readable by a computer system is stored. **In** addition, the computer-readable recording medium may be distributed in a network-connected computer system to store and execute computer-readable programs or codes in a distributed manner.

Although some aspects of the invention have been described in the context of the apparatus, it may also represent a description according to a corresponding method, wherein a block or apparatus corresponds to a method operation or feature of a method operation. Similarly, aspects described in the context of a method may also represent a feature of a corresponding block or item or a corresponding apparatus. Some or all of the method operations may be performed by (or using) a hardware device, such as, for example, a microprocessor, a programmable computer, or an electronic circuit. **In** some exemplary embodiments, one or more of the most important method operations may be performed by such an apparatus.

While the present invention has been described above with reference to the preferred exemplary embodiments of the invention, it will be understood by those skilled in the art that various modifications and changes may be made to the invention without departing from the spirit and scope of the invention as described in the following patent claims.

**Claims**

1. An operation support device for an energy storage system, the operation support device comprising:

   at least one processor; and
   a memory for storing at least one instruction executed via the at least one processor,
   wherein the at least one instruction includes:
   an instruction for collecting information about batteries and inverters that are applicable to the energy storage system;
   an instruction for deriving, based on a structure of the energy storage system, a plurality of combinations, each including one or more batteries and inverters;
   an instruction for calculating, for each of the combinations, an operating cost of the energy storage system; and
   an instruction for generating recommended combination information including information about a combination that represents a minimum operating cost among the combinations.

2. The operation support device of claim 1, wherein the instruction for collecting the information about the batteries and the inverters includes an instruction for collecting one or more of, for each of the batteries, a model name, a capacity, a critical SOC range, and a purchase cost, and for each of the inverters, a model name, a power limit, and a purchase cost.

3. The operation support device of claim 1, wherein the instruction for deriving the plurality of combinations includes:

   an instruction for deriving a range of the number of batteries based on a capacity of a battery and a power limit of an inverter; and
   an instruction for deriving a plurality of combinations applicable to the energy storage system, based on the range of the number of batteries and a design structure of the battery system.

4. The operation support device of claim 1, wherein the instruction for calculating the operating cost of the energy storage system includes:

   an instruction for calculating, for each of the combinations, a grid power purchase cost and a battery and inverter purchase cost; and
   an instruction for calculating the operating cost based on the grid power purchase cost and the battery and inverter purchase cost.

5. The operation support device of claim 4, wherein the instruction for calculating the operating cost of the energy storage system includes an instruction for calculating a grid power purchase cost for a predetermined period of time for each of the combinations, based on past historical information about at least one of the energy storage system, a load interworking with the energy storage system, and a power generation device interworking with the energy storage system.

6. The operation support device of claim 5, wherein the instruction for calculating the grid power purchase cost includes:

an instruction for collecting information about a power consumption state of the load and information about a power generation state of the power generation device;
an instruction for deriving, by using an objective function defined by the grid power purchase cost, an operating schedule including the amount of charge and discharge per time interval that minimizes the grid power purchase cost; and
an instruction for applying the operating schedule and grid power cost information to the energy storage system according to each of the combinations to calculate the grid power purchase cost for a predetermined period of time for each of the combinations.

7. The operation support device of claim 6, wherein the objective function includes defined constraints including at least one of: a first condition concerning a balance of power supply and power consumption, a second condition concerning a state of charge (SOC) according to a charge/discharge efficiency of the battery, a third condition concerning the amount of limit charge of the battery, a fourth condition concerning the amount of power limit of the inverter, and a fifth condition concerning a binarization of state of charge and state of discharge.

8. The operation support device of claim 1, wherein the at least one instruction further includes an instruction for providing the generated recommended combination information to a user terminal interworking with the energy storage system.

9. The operation support device of claim 8, wherein the recommended combination information includes one or more of the number of batteries applied to the energy storage system, a connection structure of the batteries, and a model name of the inverter.

10. An operation support method for an energy storage system, the operation support method comprising:

collecting information about batteries and inverters that are applicable to the energy storage system;
deriving, based on a structure of the energy storage system, a plurality of combinations, each including one or more batteries and inverters;
calculating, for each of the combinations, an operating cost of the energy storage system; and
generating recommended combination information including information about a combination that represents a minimum operating cost among the combinations.

11. The operation support method of claim 10, wherein the collecting of the information about the batteries and the inverters includes collecting one or more of, for each of the batteries, a model name, a capacity, a critical SOC range, and a purchase cost, and for each of the inverters, a model name, a power limit, and a purchase cost.

12. The operation support method of claim 10, wherein the deriving of the plurality of combinations includes:

deriving a range of the number of batteries based on a capacity of a battery and a power limit of an inverter; and
deriving a plurality of combinations applicable to the energy storage system, based on the range of the number of batteries and a design structure of the battery system.

13. The operation support method of claim 10, wherein the calculating of the operating cost of the energy storage system includes:

calculating, for each of the combinations, a grid power purchase cost and a battery and inverter purchase cost; and
calculating the operating cost based on the grid power purchase cost and the battery and inverter purchase cost.

14. The operation support method of claim 13, wherein the calculating of the operating cost of the energy storage system includes calculating a grid power purchase cost for a predetermined period of time for each of the combinations, based on past historical information about at least one of the energy storage system, a load interworking with the energy storage system, and a power generation device interworking with the energy storage system.

**15.** The operation support method of claim 14, wherein the calculating of the grid power purchase cost includes:

collecting information about a power consumption state of the load and information about a power generation state of the power generation device;
deriving, by using an objective function defined by the grid power purchase cost, an operating schedule including the amount of charge and discharge per time interval that minimizes the grid power purchase cost; and
applying the operating schedule and grid power cost information to the energy storage system according to each of the combinations to calculate the grid power purchase cost for a predetermined period of time for each of the combinations.

**16.** The operation support method of claim 15, wherein the objective function includes defined constraints including at least one of: a first condition concerning a balance of power supply and power consumption, a second condition concerning a state of charge (SOC) according to a charge/discharge efficiency of the battery, a third condition concerning the amount of limit charge of the battery, a fourth condition concerning the amount of power limit of the inverter, and a fifth condition concerning a binarization of state of charge and state of discharge.

**17.** The operation support method of claim 10, wherein the operation support method further includes: providing the generated recommended combination information to a user terminal interworking with the energy storage system.

**18.** The operation support method of claim 17, wherein the recommended combination information includes one or more of the number of batteries applied to the energy storage system, a connection structure of the batteries, and a model name of the inverter.

[Figure 1]

[Figure 2]

[Figure 3]

START

COLLECT BATTERY INFORMATION AND
INVERTER INFORMATION — S310

DERIVE COMBINATIONS CONSISTING OF
BATTERIES AND INVERTERS — S320

CALCULATE OPERATION COST FOR
EACH COMBINATION — S330

DERIVE COMBINATION REPRESENTING
MINIMUM OPERATION COST — S340

GENERATE RECOMMENDED
COMBINATION INFORMATION — S350

PROVIDE RECOMMENDED
COMBINATION INFORMATION — S360

END

[Figure 4]

(A)

| Technical data | Bat_#1 | Bat_#2 | Bat_#3 | | Bat_#N |
|---|---|---|---|---|---|
| Cap. | XX | XX | XX | | XX |
| Min. SoC | XX | XX | XX | ... | XX |
| Max. SoC | XX | XX | XX | | XX |
| cost | XX | XX | XX | | XX |

(B)

| Technical data | Inv_#1 | Inv_#2 | Inv_#3 | | Inv_#N |
|---|---|---|---|---|---|
| Normal battery voltage | XX | XX | XX | | XX |
| Battery voltage range | XX ~ XX | XX ~ XX | XX ~ XX | | XX ~ XX |
| Max. Charging power | XX | XX | XX | ... | XX |
| Max. Discharging power | XX | XX | XX | | XX |
| cost | XX | XX | XX | | XX |

| INVERTER MODEL NAME / NUMBER OF BATTERIES (SERIES) | Inv_#1 | Inv_#2 | Inv_#3 | Inv_#4 | Inv_#5 |
|---|---|---|---|---|---|
| 3 | C #1 | C #2 | C #3 | C #4 | C #5 |
| 4 | C #6 | C #7 | C #8 | C #9 | C #10 |
| 5 | C #11 | C #12 | C #13 | C #14 | C #15 |

[Figure 5]

[Figure 6]

| No. | GRID POWER PURCHASE COST | BATTERY/INVERTER PURCHASE COST | OPERATION COST |
|---|---|---|---|
| C #1 | 34 | 100 | 134 |
| C #2 | 28 | 110 | 138 |
| C #3 | 26 | 115 | 141 |
| C #4 | 24 | 120 | 144 |
| C #5 | 24 | 125 | 149 |
| C #6 | 32 | 105 | 137 |
| C #7 | 30 | 106 | 136 |
| C #8 | 26 | 107 | 133 |
| C #9 | 23 | 120 | 143 |
| C #10 | 23 | 130 | 153 |
| C #11 | 31 | 107 | 138 |
| C #12 | 31 | 115 | 146 |
| C #13 | 30 | 120 | 150 |
| C #14 | 28 | 130 | 158 |
| C #15 | 24 | 140 | 164 |

[Figure 7]

## INTERNATIONAL SEARCH REPORT

| International application No. |
|---|
| **PCT/KR2024/010138** |

**A.    CLASSIFICATION OF SUBJECT MATTER**

**H02J 3/32**(2006.01)i; **H02J 7/00**(2006.01)i; **G06Q 50/06**(2012.01)i

According to International Patent Classification (IPC) or to both national classification and IPC

**B.    FIELDS SEARCHED**

Minimum documentation searched (classification system followed by classification symbols)

H02J 3/32(2006.01); B60L 11/18(2006.01); B60M 1/30(2006.01); G05B 19/042(2006.01); G06Q 50/06(2012.01); H02J 3/38(2006.01); H02J 7/34(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 에너지 저장 시스템(energy storage system), 인버터(inverter), 배터리(battery), 조합(combination), 운영 비용(operating cost)

**C.    DOCUMENTS CONSIDERED TO BE RELEVANT**

| Category* | Citation of document, with indication, where appropriate, of the relevant passages | Relevant to claim No. |
|---|---|---|
| A | US 9056556 B1 (ELWHA LLC) 16 June 2015 (2015-06-16)<br>See columns 50-53; and claims 1-30. | 1-18 |
| A | CN 110896246 A (SOUTHWEST JIAOTONG UNIVERSITY et al.) 20 March 2020 (2020-03-20)<br>See claims 1-8. | 1-18 |
| A | US 2020-0089178 A1 (CON EDISON BATTERY STORAGE, LLC) 19 March 2020 (2020-03-19)<br>See claims 21-41; and figure 15. | 1-18 |
| A | KR 10-2022-0095313 A (GRIDWIZ INC.) 07 July 2022 (2022-07-07)<br>See claims 1-8. | 1-18 |
| A | KR 10-1904902 B1 (SHIN, Dong-Jun) 12 October 2018 (2018-10-12)<br>See claim 1. | 1-18 |

☐ Further documents are listed in the continuation of Box C.          ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **04 November 2024** | **05 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/010138**

| Patent document cited in search report | | | Publication date (day/month/year) | Patent family member(s) | | | Publication date (day/month/year) |
|---|---|---|---|---|---|---|---|
| US | 9056556 | B1 | 16 June 2015 | None | | | |
| CN | 110896246 | A | 20 March 2020 | CN | 110896246 | B | 26 April 2022 |
| US | 2020-0089178 | A1 | 19 March 2020 | US | 10423138 | B2 | 24 September 2019 |
| | | | | US | 11137731 | B2 | 05 October 2021 |
| | | | | US | 11681264 | B2 | 20 June 2023 |
| | | | | US | 2018-0254632 | A1 | 06 September 2018 |
| | | | | US | 2022-0100158 | A1 | 31 March 2022 |
| | | | | US | 2024-0053715 | A1 | 15 February 2024 |
| KR | 10-2022-0095313 | A | 07 July 2022 | KR | 10-2544181 | B1 | 19 June 2023 |
| KR | 10-1904902 | B1 | 12 October 2018 | None | | | |

Form PCT/ISA/210 (patent family annex) (July 2022)

**EP 4 632 988 A1**

**Patent documents cited in the description**

- KR 1020230092219